Europäisches Patentamt

European Patent Office

Office européen des brevets

(11) Publication number: **0 254 878 B1**

## EUROPEAN PATENT SPECIFICATION

(45) Date of publication of patent specification: **12.05.93**

(21) Application number: **87109205.2**

(22) Date of filing: **26.06.87**

(51) Int. Cl.⁵: **H04L 12/28,** H04L 12/54, H04L 12/58

(54) Packet data communication system with ring type transmission line.

(30) Priority: **27.06.86 JP 150775/86**
**12.09.86 JP 216468/86**
**07.01.87 JP 1412/87**

(43) Date of publication of application:
**03.02.88 Bulletin 88/05**

(45) Publication of the grant of the patent:
**12.05.93 Bulletin 93/19**

(84) Designated Contracting States:
**DE FR GB**

(56) References cited:
**EP-A- 0 040 351**
**US-A- 4 574 375**

**PROCEEDINGS OF THE INTERNATIONAL SWITCHING SYMPOSIUM, 7th-11th May 1984, Florence, part 2, section 42B, paper 3, pages 1-6, North-Holland, Amsterdam, NL; T. TAKEUCHI et al.: "Synchronous composite packet switching for ISDN switching system architecture"**

(73) Proprietor: **FUJITSU LIMITED**
**1015, Kamikodanaka Nakahara-ku**
**Kawasaki-shi Kanagawa 211(JP)**

(72) Inventor: **Higuchi, Masahiro**
**1091-8-206, Kamikodanaka Nakahara-ku**
**Kawasaki-shi Kanagawa 211(JP)**
Inventor: **Fukuda, Haruki**
**6-11-19, Nishioi Shinagawa-ku**
**Tokyo 140(JP)**
Inventor: **Tazaki, Kenshi**
**3-2-4, Chiyoda**
**Kashiwa-shi Chiba 277(JP)**
Inventor: **Matsuda, Masahiro**
**3-21-112-102, Yurigaoka Asao-ku**
**Kawasaki-shi Kanagawa 215(JP)**
Inventor: **Awazu, Tomohiko**
**629-56-301, Shimokodanaka Nakahara-ku**
**Kawasaki-shi Kanagawa 211(JP)**

(74) Representative: **Lehn, Werner, Dipl.-Ing. et al**
**Hoffmann, Eitle & Partner Patentanwälte Arabellastrasse 4**
**W-8000 München 81 (DE)**

GLOBECOM'85 – IEEE GLOBAL TELECOM-
MUNICATIONS CONFERENCE, 2nd–5th De-
cember 1985, New Orleans, vol. 1, pages
1.4.1 – 1.4.6, IEEE, New York, US; T. MINAMI
et al.: "200 MB/S synchronous TDM loop
optical lan suitable for multi–service in-
tegration"

IEEE JOURNAL ON SELECTED AREAS IN
COMMUNICATIONS, vol. SAC–3, no. 6, No-
vember 1985, pages 842–848, IEEE, New
York, US; L.A. BERGMAN et al.: "A synchro-
nous fiber optic ring local area network for
multigigabit/s mixed–traffic communica-
tion"

## Description

The present invention relates to a packet data communication system with a ring type transmission line represented by a local area network (LAN) and particularly to a high speed, large capacity packet data communication system for efficiently transmitting various data such as multiplexed voice, moving images and burst data, etc.

From GLOBECOM'85 – IEEE "GLOBAL TELECOMMUNICATIONS CONFERENCE", December 1985, a data communication system is known comprising a ring type transmission line for circulating frames respectively including frame header and a predetermined number of slots on which packets to be transmitted are loaded and a plurality of interference nodes provided between said ring type transmission line for loading packets on slots and receiving packets from slots for terminals connecting thereto, wherein each of said interface nodes include a predetermined number of sub−transmission lines for passing each of said slots in parallel through the interface node terminal interfaces. Said prior art packet data commu−nication system is a so−called 200 Mb/s multi−service optical LAN with a synchronized TDM loop structure. The LAN is quite suitable for applications integrating multiple services including video, image, data and voice in which each service uses its own communication speed, access method and mode indepedently.

Advancement of hardware/software in the field of information processing field is notable in these years. With improvement in processing capability of computers, microprocessors, higher performance and spreading of communication terminals and work stations, larger file capacity such as optical disk and diversion of processing with development of diverged data bases a network has to be established between these hardware/software, and the volume of data within the network and between networks is increasing.

In addition, improvement in function of image processing hardware/software and advent of TV con−ference systems requires a network which can handle unified high speed and large capacity image information in addition to the existing voice and data.

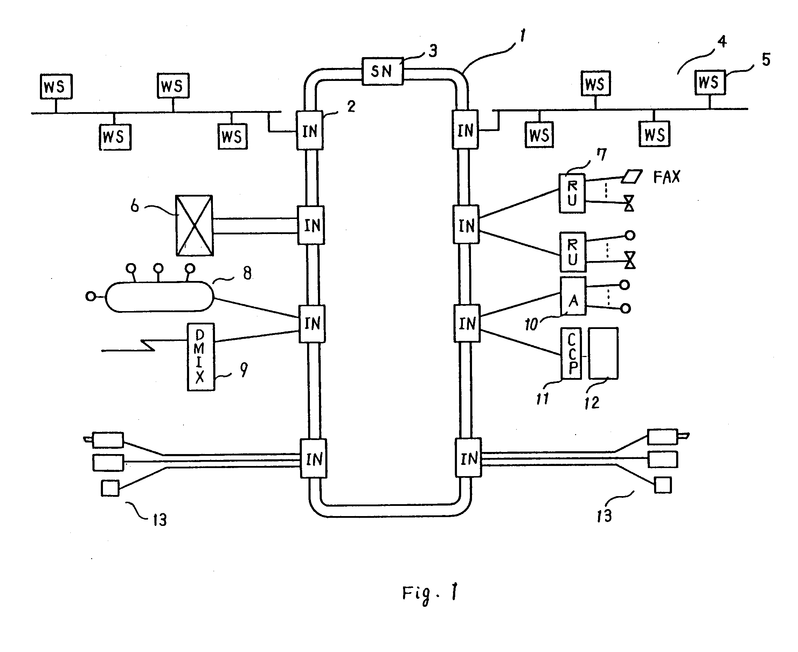

Fig. 1 is an example of structure of said network (local area network). As the trunk network, a ring type transmission line 1 is employed. In the course of the ring type transmission line 1, a plurality of interface nodes 2 are provided and each interface node accommodates various systems. Namely, these are bus type local area networks for communication between a plurality of workstations 5, digital PABX 6, telephone sets and facsimiles connected and controlled by the digital PABX 6, remote unit 7 which accommodates data terminals, low speed ring type local area nework 8, communicaton control apparatus 11 of main frame computer 12 and adapter 10 which accommodates its TSS terminal, TV conference system 13 and composite multiplexing apparatus 9 for connection with high speed leased digital line. Each system is respectively connected with the high speed ring type network 1 through the interface node 2 and the system−to−system communication can be made through the control of such interface node 2. In addition, the high speed ring type network 1 is supervised by the supervisor node 3. As an access method to such ring type network 1, a slot ring system is proposed. In this slot ring system, a plurality of fixed length slots are circulating on the network 1, each interface node 2 detects the available slot, the data from the terminals accommodated in the own node is loaded to the detected available slot after it is converted to the packet data and then such packet data is sent to the other interface node 2.

As a method of realizing high speed and large capacity network, it is possible to improve the transmission rate of packet itself or to transmit in parallel a plularity of packets without changing the transmission rate of packet. High speed operation of LAN has been realized almost solely by the former method because it is considered that the number of gates of the control circuits increases if the latter method is employed. Accordingly, investigation has been little made for the latter method.

However, when considering realization of LAN having the transmission capacity in the order of several hundres Mb/s, the problems of this realization such as high power consumption of ECL circuit and "difficulty in handling" during debug/maintenance occur in the method for improving the transmission rate of packet. As an effective method for avoiding such problems it is considered to employ the parallel communication system where high speed and large capacity transmission is realized by transmitting in parallel a plurality of packets and each packet is processed by low speed TTL circuit.

It is therefore an object of the present invention to provide a practical structure of the system for realizing packet communication system utilizing such a parallel communicaton system. A plurality of packets shall be efficiently transmitted and a plurality of packets shall be received from a plurality of transmission lines in said parallel communication system. The object is solved for a packet data commu−nication system comprising: a ring type transmission line for circulating frames respectively including frame header and a predetermined number of slots on which packets to be transmitted are loaded; and a plurality of interface nodes provided between said ring type transmission line for loading packets on slots and receiving packets from slots for terminals connecting thereto, wherein each of interface nodes include a predetermined number of sub−transmission lines for passing each of slots in parallel through the interface node terminal interfaces, a synchronization means and a switch means; by the characterizing clause features of claim 1, i.e.

in that each of said interface nodes respectively comprises a plurality of sending buffers for storing packets to be transmitted and a plurality of receiving buffers for storing packets to be received, packet processing means for detecting whether the slots on each of the sub−transmission lines are available or not and packet addressed on the slots, wherein said synchronization means are adapted for synchronizing the clock of the packet processing means to input frames using said frame header and for generating a plurality of timing signals to said packet processing means, and said switch means, controlled by said packet processing means, are adapted for connecting each of said sending buffers and receiving buffers to any one of said sub−transmission lines.

It is advantageous that the overhead time of communication generated by composite handling of data in different characteristics such as voice and burst data is eliminated by the invention. Further embodiments and advantages of the invention will be described with reference to the following drawings, in which:

Fig. 1 shows a structure of the Local Area Network,
Fig. 2 shows a principle block diagram of this invention,
Fig. 3 shows a frame format on the ring type transmission line,
Fig. 4 shows a block diagram of an interface node,
Fig. 5 shows a block diagram of a send interface,
Fig. 6 shows a block diagram of a receive interface,
Fig. 7 shows a block diagram of a packet processing circuit,
Fig. 8 shows a block diagram of a control circuit,
Fig. 9 shows a packet sending/receiving sequence of a system of the present invention,
Figs. 10(A) ~ (I) show the process of connecting sending/receiving buffers to sub−transmission lines,
Fig. 11 shows another structure of an interface node,

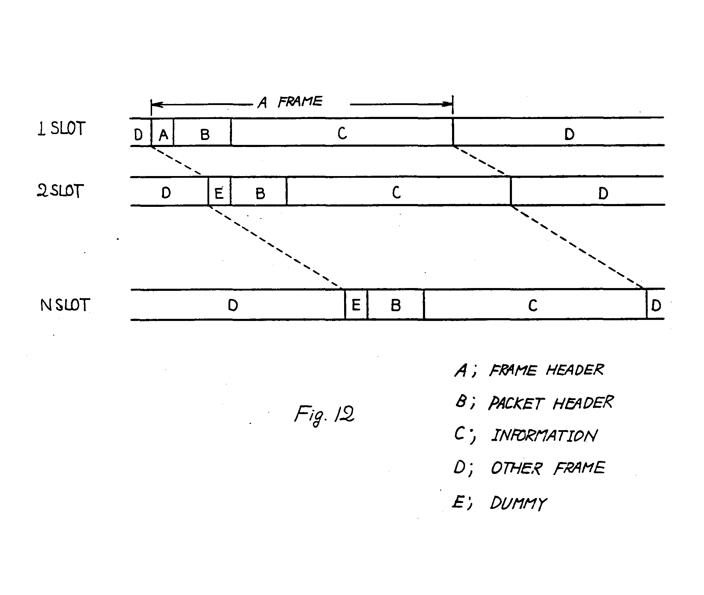

Fig. 12 shows another frame format of this invention.

Throughout the above figures, the same numerals and symbols indicate same parts, and the signal lines having the symbol "⊬" show that there actually exist a plurality of signal lines.

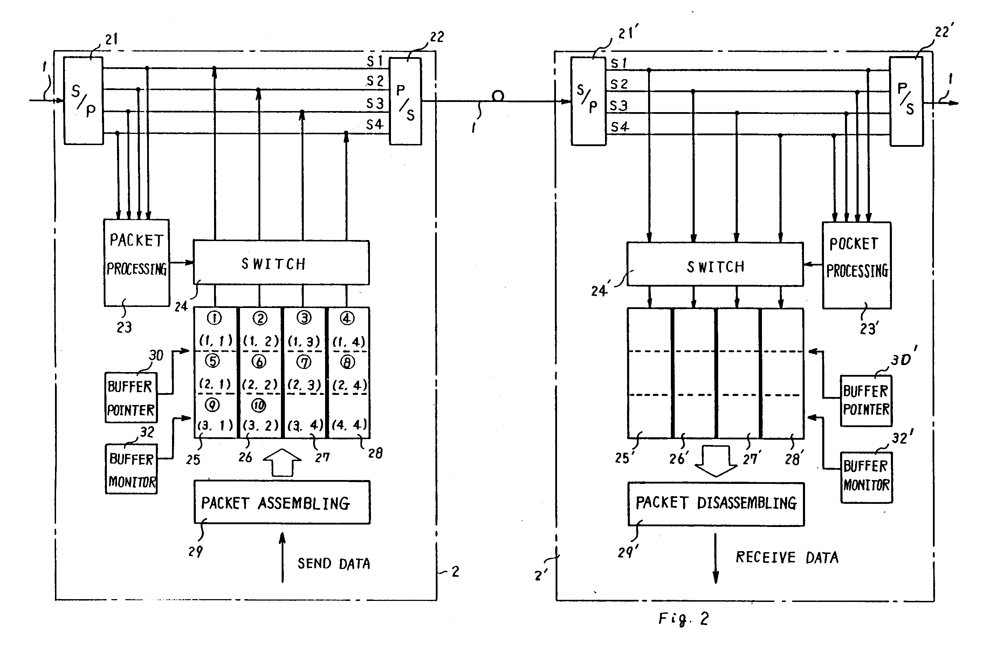

Fig. 2 is principle block diagram wherein the ring type transmission line 1 is formed by a plurality of sub−transmission lines S1, S2, S3, S4 having the same transmission delay time. In this figure, the parallel transmitting of packets is carried out by four sub−transmission lines S1, S2, S3, S4. The transmission line 1 corresponding to the main tansmission line 1 is formed by a single line of optical fiber. Therefore, respective interface nodes 2, 2' are provided with the series/parallel conversion circuits 21, 21' and parallel/series conversion circuits 22, 22' at the input and output sides of the transmission line 1 bit interleaved four packets on the transmission line 1 are disassembled into respective packets and the disassembled respective bits are multiplexed in bit. Therefore, the interface nodes 2, 2' operates as if four sub−transmission lines S1, S2, S3, S4 were existing independently.

29 is a packet assembling circuit which stores the sequence of send data stream (SEND DATA) by assembling the send data stream flowing into the interface node 2 of sending side into the packets; 25, 26, 27, 28 are send buffers which accommodate the assembled plural packets of which sequence is stored in the packet assembly circuit 29; 24 is a switch which stores the sequence of each packet in the send buffers 25, 26, 27, 28 and transmits the packets to the transmission lines S1 − S4 in accordance with the condition of the sub−transmission lines S1, S2, S3, S4; 23, 23' are packet processing circuits which detect the condition of packets on the sub−transmission lines S1 ~ S4 and controls the switch 24; 24' is a switch which stores said sequence on the sub−transmission lines S1 ~ S4 and transmits the packets to the receive buffers 25', 26', 27', 28' in the same sequence as the accommodation sequence on the send buffers 25 ~ 28; 29' is a packet disassembling circuit which reforms the send data stream (SEND DATA) in the sequence in the receive buffers 25' ~ 28'.

In Fig. 2, the input send data stream (SEND DATA) is assembled to a plurality of packets in the packet assembling circuit 29 and each packet is accommodated in the send buffers 25 ~ 28 in such a manner as storing the sequence of send data stream. The sequence of these send buffers 25 ~ 28 is stored by the switching operation of the switch 24 under the control of packet processing circuit 23 and the packets are sent to the sub−transmission lines S1 ~ S4. The packet processing circuit 23' accommodates the packets in the receive buffers 25' ~ 28' in the same accommodation sequence at the send buffers 25 ~ 28, keeping the sequence on the sub−transmission lines S1 ~ S4. The packet disassembling circuit 29' reconstructs the send data stream in the sequence on the receive buffers 25' ~ 28'.

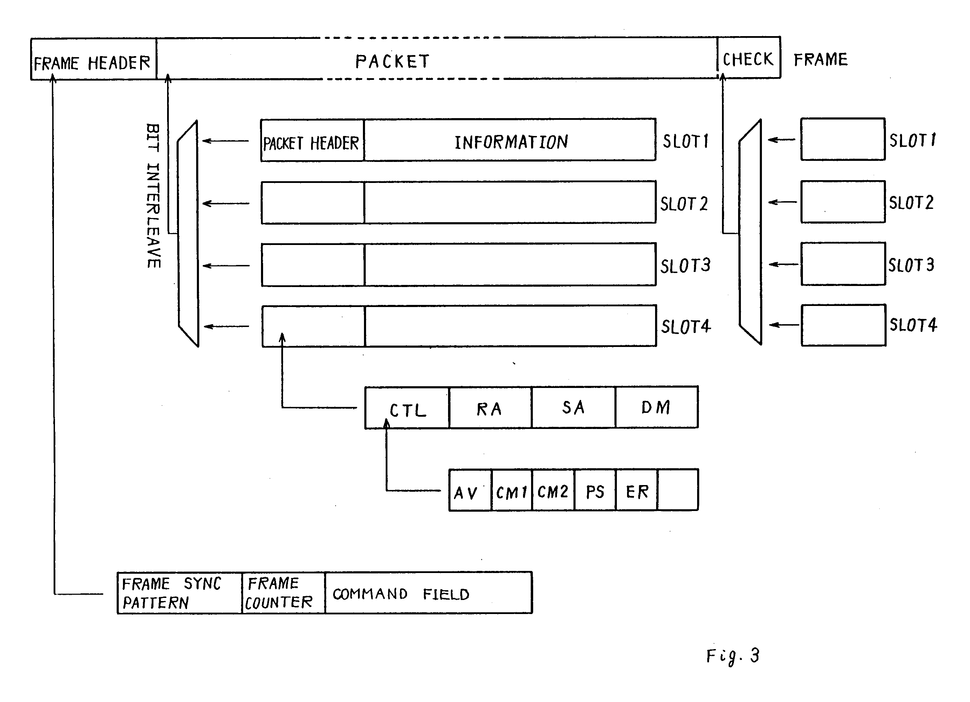

Here, the data format on the transmission line 1 is explained with reference to Fig. 3.

In the abovementioned system, as indicated in Fig. 3, a plurality of frames consisting of four slots SLOT 1, 2, 3, 4 (accommodating packets) which are multiplexed in parallel by the bit interleave are circulated. In this case, at least four buffers are requried for sending and receiving sides so that four slots being transmitted in parallel can be accessed simultaneously. The packets stored in the send buffer are loaded to the slots SLT1 ~ 4.

Here, ① the sequential relation between packets on the send buffers 25 ~ 28, ② sequential relation between packets on the transmission lines S1 ~ S4, ③ sequential relation between packets on the receive buffers $25'$ ~ $28'$ are defined as indicated below.

[Sequential relation of packets on the send and receive buffers]

In case n send and receive buffers exist, the linear sequence (number) 1, 2, ....., n is given to the n buffers (packet group). If the $h-th$ packet accommodated in the buffer g accommodating packet group is expressed as (g, h), the sequential relation between different two packets (g, h) and (i, j) becomes (1) (g, h) < (i, j) when g < i under the condition that h < j or h = j; (2) (g, h) > (i, j) when g > i under the condition that h > J or h = j.

Namely, a younger number of "row (horizontal)" is superior between packets of send and receive buffers and a younger number of "column (vertical)" is superior when the "row" is the same. It means that the packet having the younger "row" and "column" numbers for accommodation into the receive buffer is transmitted because its transmission sequence is considered minimum.

[Sequential relation between packets on the transmission lines]

In case m slots to be transmitted on the $sub-transmission$ lines in parallel exist, as the linear sequence number 1, 2, ...., n are given to such slots (SLT1, 2, 3, 4, ..., m) as indicated in Fig. 3. If the packet on the $i-th$ slot of the frame passing the interface node at the time t is expressed as (i, t), the sequence between different two packets $(i, t_1)$ and $(j, t_2)$ becomes (1) $(i, t_1) < (j, t_2)$ when i < j under the condition that $t_1 < t_2$ or $t_1 = t_2$; or (2) $(i, t_1) > (j, t_2)$ when i > j under the condition that $t_1 > t_2$ or $t_1 = t_2$.

Namely, when the passing time is different, the frame with quicker passing time is superior, when the passing time of frame is the same, the packet of slot having younger number is superior. This means that the slots of younger numbers of quicker frames are set precedingly in case of sending the packets from the send buffer and the quicker slots and younger slots are accommodated precedingly in case of $accom-$ modating slots into the receive buffer.

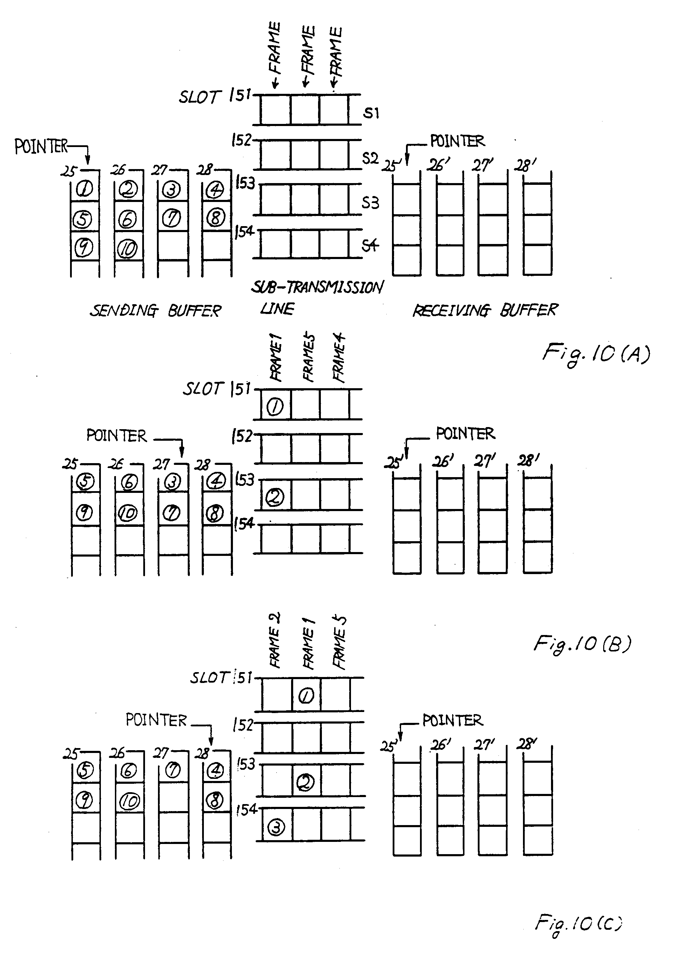

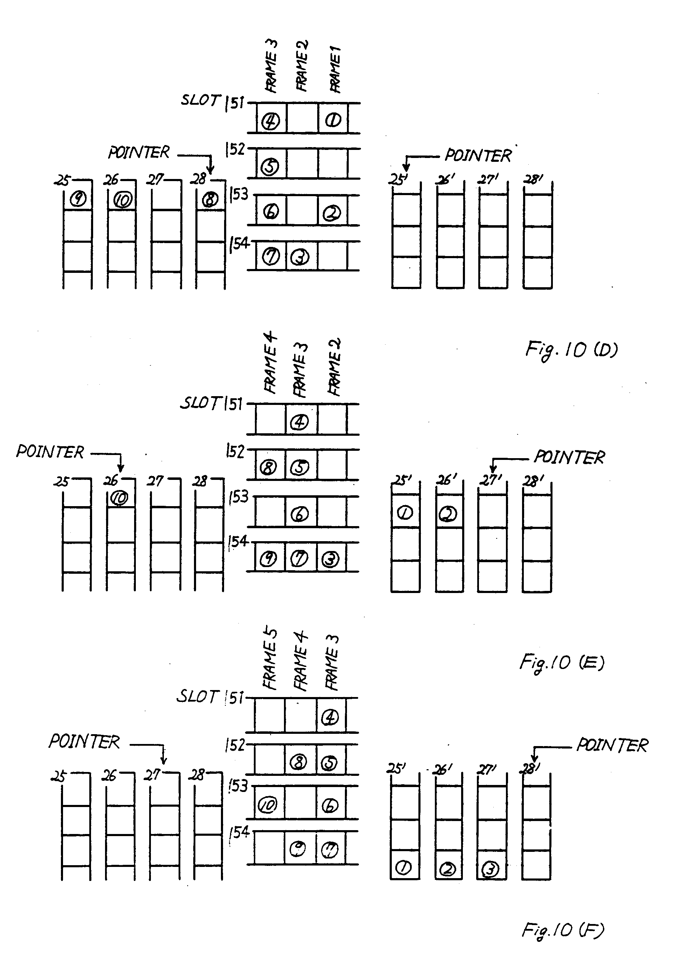

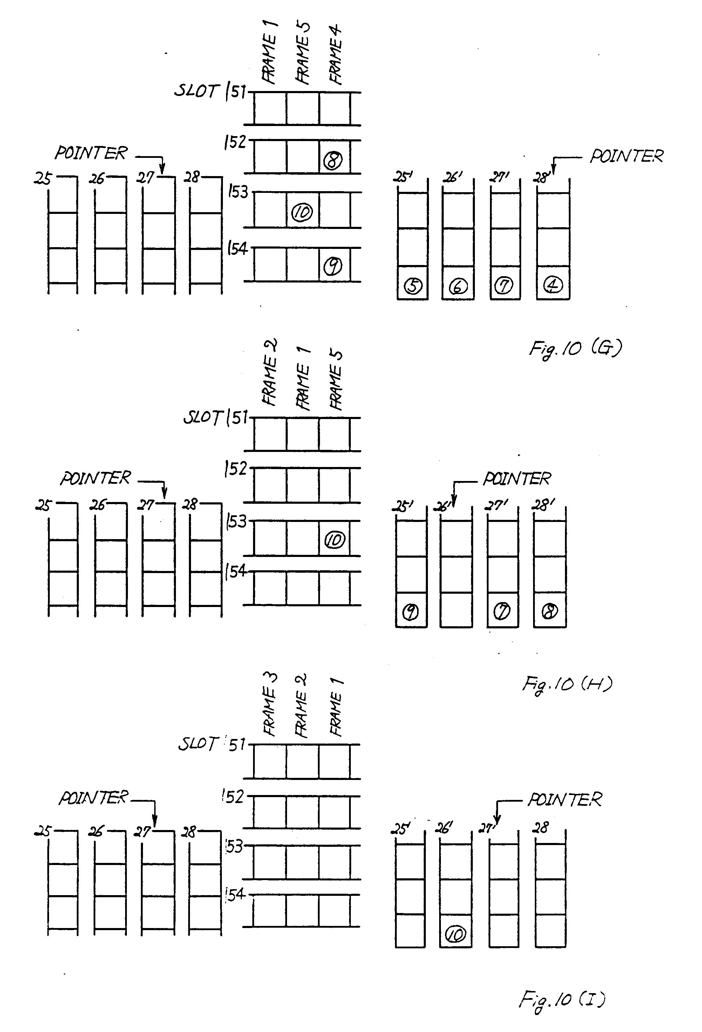

Next, operations are explained along the transmission process indicated in Figs. 10A ~ I with reference to Fig. 2. Here, estimated is an example where the 10 packet messages ①, ②, ③, ④, ⑤, ⑥, ⑦, ⑧, ⑨, ⑩ are transmitted in parallel with four $sub-transmission$ lines. As an example, the packet disassembling circuit 29' partitions the data stream into the packets of the fixed length and each buffer is accessed by sending the packet one by one to the buffers 25, 25', 26,26', 28, $28'$, 27, 27',........The packets may be transmitted in any sequence if the matching is established between the packet assembling circuit 29 and the packet disassembling circuit $29'$.

Transmission process 1 (Fig. 10A):

The packet messages ①, ②, ③ are sequentially accommodated in the send buffers 25, 26, 27. In this case, the send buffer pointer 30 which indicates the buffer storing the packet to be transmitted next indicates the send buffer 25. Nothing is yet transmitted to the $sub-transmission$ lines S1 ~ S4. The receive buffer pointer $30'$ indicates the receive buffer $25'$. The successive packets ④, ⑤, ⑥, ⑦, ⑧, ⑨, ⑩ are sequentially accommodated later as indicated by the parentheses.

Transmission process 2 (Fig. 10B):

The packet processing circuit 23 detects that the slot 151 of frame 1 and the slot 153 of frame 1 are empty. In case there are three packets waiting for transmission by the buffer monitor 32 and the send buffer pointer 30 is in the buffer 25, the switch 24 connects the send buffer 25 to the slot 151 and the send buffer 26 to the slot 153. Thereby, the slot 152 of frame 1 and slot 154 of frame 1 passes through. Thereby,the stored packets ①, ② are transmitted by giving the readout signal to the send buffers 25 and 26. The send buffer pointer 30 indicates the buffer 27. Therefore, the packet of the minimum "row" and "column" is extracted with the first priority and it is then transmitted to the youngest slot. The send buffers 25 and 26

5

accommodate respectively the successive packets ⑤ and ⑥ in place of ① and ②.

Such operations are also carried out in the transmission process 3 (Fig. 10C) and 4 (Fig. 10D).

Transmission process 5 (Fig. 10E):

The packets sent to the sub – tansmission lines S1 ~ S4 as explained previously are then accom – modated in the receive buffers $25'$ ~ $28'$ from the sub – transmission lines S1 ~ S4. Namely, the packet processing circuit $23'$ detects that the packets ① and ② of the frame 1 match the self interface node addresses and the packets ① and ② are respectively accommodated in the receive buffers $25'$ and $26'$ since the receiver buffer pointer $30'$ indicates the receive buffer $25'$ (Fig. 10D). In this case, the switch $24'$ switches the slot 151 of frame 1 to the buffer $25'$ and the slot 153 of frame 1 to the buffer $26'$ respectively and sets the receive buffer pointer $30'$ to indicate the receive buffer $27'$ by giving the write signal to the receive buffers $25'$, $26'$. Therefore, as explained previously, the packets having younger number among those in the quicker packets are sequentially accommodated in the sequence of receive buffer number.

Such operations are also carried out in the transmission processes 6 ~ 9 (Fig. 10F ~ I). Thereby, packet sending and receiving come to the end.

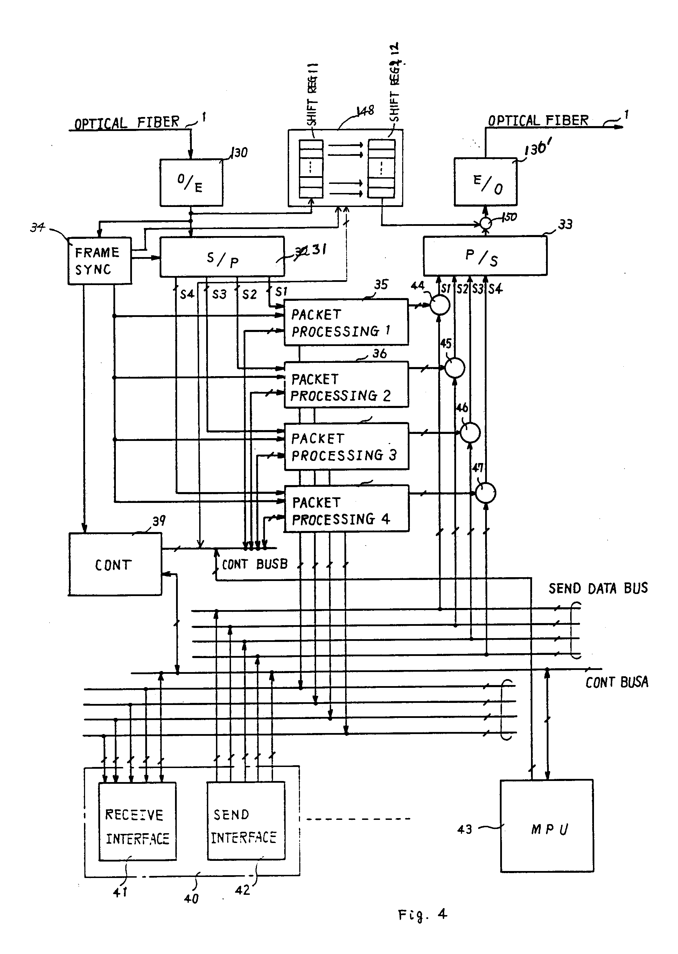

The practical structures of interface nodes 2, $2'$ and supervisor node 3 are explained with reference to Fig. 3 and Fig. 4.

The frame structure of Fig. 3 is first explained in deatail.

The packet consisting of header part and information part is loaded to the slots SLT1 ~ 4 corresponding to a plurality of sub – transmission lines S1 ~ S4. Each packet is multiplexed by the bit interleave and is loaded to the packet part in the frame of transmission line 1. The frame header is added to the heading part of packet in the frame. This frame header is provided with the frame synchronization pattern for deciding each bit position of frame, frame counter which is instrinsic to one frame (discriminated from the other frame circulating on the same transmission line) and the region for loading the command transmitted between the interface node and the supervisoring node for reserving the slots for the synchronizing communication, or sent from the console connected to the supervisor node 3 at the time of initial start of system or during the test. Meanwhile, the heading part of packet is provided with the packet header being divided into four fields of control field CTL, receive address field RA, send address SA and data administration field DM. Moreover, the control field CTL is composed of the packet valid/invalid indication flag AV, reserved/not – reseved indication flat CM1, the flag CM2 which indicates that the data in the information part is the burst information, the flag PS which indicates that the packetis not received because the terminal interface 40 is busy and the flag ER which designated whether the flag AV is deleted by the send node or receive node.

Moreover, the trailing part of packet is added with the check bit for detecting and correcting error of packet such check bit is provided at the trailing part of frame as in the case of each packet. The function of packet header will be explained later.

Fig. 4 is a block diagram of the internal structure of the interface nodes 2,$2'$ and supervisor node 3.

The optical fiber 1 corresponds to the main transmission line 1 in Fig. 1 and the frame having the structure consisting of a plurality of slots SLT1 ~ 4 indicated in Fig. 3 circulates therein. The photoelectric converter 130 converts the received optical signal into the electric signal and then inputs said received signal after the waveform shaping to the frame synchronizing circuit 34 and serial/parallel conversion circuit 31. The frame synchronizing circuit 34 detects the frame synchronizing pattern added to the heading part of frame for frame synchronization and outputs various timing signals for deciding bit position of frame to the packet processing circuits 35, 36, 37, 38, control circuit 39 and series/parallel converting circuit 31. The series/parallel converting circuit 31 is driven by the clock signal synchronized with the frame on the transmission line 1 input from the frame synchronizing circuit 34 and outputs the parallel signal of 4 bits. This parallel signal is the packet loaded on each slot SLOT1 ~ 4 in Fig. 3.

The packet processing circuits 35 ~ 38 analyze the packet header on the basis of the timing signal from the frame synchronizing circuit 34. The results of analysis of packet processing circuits 35 ~ 38 are sent to the control part 39 through CONT BUSB. The control circuit 39 changes the switches 44 ~ 47 based on the result of analysis and thereby sends the packets stored in the send buffers 25 ~ 28 (existing in the send interface 42) within the terminal interface 40 to the parallel/serial converting circuit 33 through the send data bus and then executes the control for sending it to the transmission line 1 and to store the received packets to the receive buffers $25'$ ~ $28'$ (existing in the receive interface 41) through the receive data bus. These controls are executed by the control signal transmitted through the CONT BUSA. The terminal inteface 40 is provided with the send interface 42 consisting of the switch 24, send buffers 25 ~ 28 and packet assembling circuit 29 indicated in Fig. 1 and the receive interface 41 consisting of the switch $24'$, receive buffers 25′ ~ 28′ and packet disassembling circuit 29′. Fig. 4 indicates only one unit of terminal interface 40 but a plurality of units may be connected.

The control circuit 39 decides the transmission mode (synchronous continuous communication or burst communication) depending on the send request from the terminal cnnected to the terminal interface 40. When the synchronous continuous communication is decided, a necessary number of slots are reserved, in accordance with the amount of information, to the supervisor node 3 using the packet header indicated in Fig. 3 by controlling the packet processing circuits 35 ~ 38.

Here, since the phase of parallel slots is the same in the frame structure indicated in Fig. 3, the packet headers reach the packet processing circuit simultaneously. Therefore, the packet processing circuits in the same number as the parallel slots must be prepared.

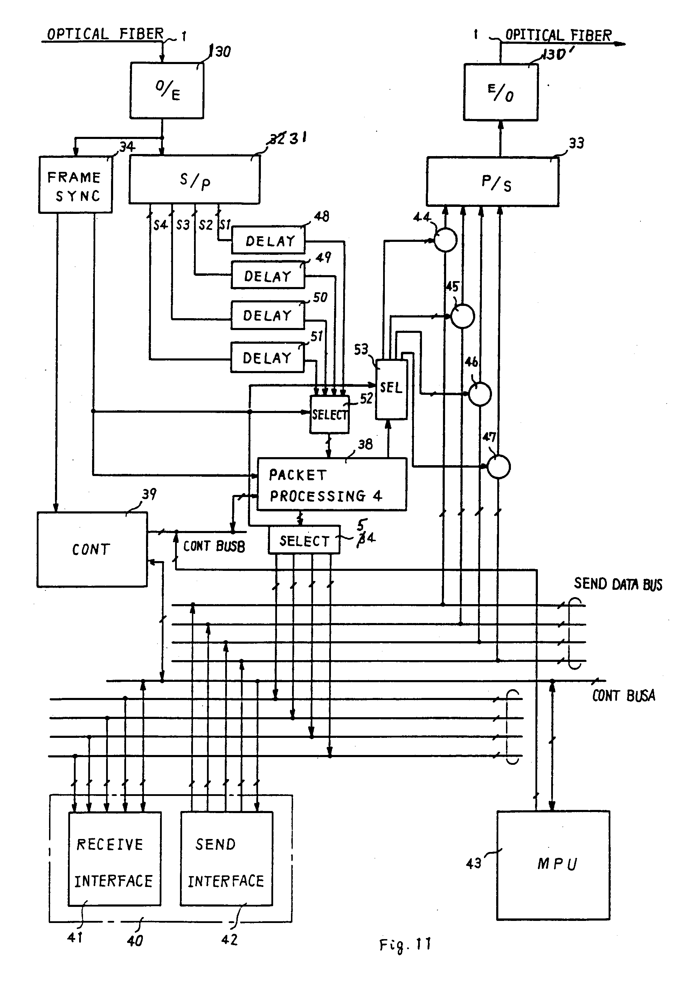

In this case, such frame structure that the phases of slots transferred in bit multiplex to the ring type network are deviated for the specified amount as indicated in Fig. 2 is employed. The E of #2 slot ~ #N slot indicates the dummy region in the same length as the frame header for time difference adjustment and the frame header is not provided up to the #2 ~ #N slots. The structure of Fig. 4 is therefore changed into Fig. 11 and outputs S1 ~ S4 of the serial/parallel converting circuit 31 are respectively input to the selector 52 through the delay circuits 48 ~ 51. Since the frame synchronizing circuit 34 is capable of detecting the packet header of each packet, the packet header detection signal sent from the frame synchronizing circuit 34 is input to the selector 52 and only one of said outputs S1 ~ S4 is input to the packet processing circuit 38 on the time division basis.

The output to the receive data bus from the packet processing circuit 38 is also provided through the selector 54 on the time division basis.

The output to the switches 44 ~ 47 can also be provided by the selector 53 on the time division basis.

The switch timing signals of selectors 52 ~ 54 can be generated in the frame synchronizing circuit 34. With such structure, only one packet processing circuit is necessary and thereby the hardware can be saved.

The delay circuits 48 ~ 51 are provided for queuing the delay in operation of the packet processing circuit. As described previously, the packet communication system with ring type transmission line of the present invention is required to flexibly cope with the system where the communication (synchronous continuous communication) which is required to have periodicity in data transfer like the image commu − nication or voice communication and the communication (burst communication) which is not required to guarantee the periodicity of data tansfer unlike the data communication between computers but is required to make small the transmission delay as much as possible coexist and communication mode changes dynamically.

However, the slot ring system, where the empty slots (available slots) among the slots defined by dividing the frame circulated through the ring type transmission line for the specified length are seized and data transmission between the terminals connected to the ring type transmission line by loading the packets to such slots, must inevitably wait temporarily for transmission of data because if data transmission request, namley many requests for use of empty slots are generated at a time, the empty slots becomes shortage for request of use. Under such condition, the synchronous continuous communication which is restricted in the transfer periodicity will result in serious interference such as data overflow or data underflow, etc.

In general, therefore, as a means for eliminating such disadvantage, the packets of the specified number which are circulated through the loop type transmission line are sorted to a couple of kinds, the one is the packets for synchronous continuous communication and the other is the packets for burst commu − nication. For the former kind of packets, a number of communications is always set to a value less than the number of packets and the system design is defined considering that packets can be used any time desired for communication.

However, this system provides a problem that flexibility is insufficient because the ratio between the synchronous continuous communication and burst communication is fixed and flexible measures for the system where the communication mode changes dynamically is difficult.

Therefore, the packet communication system of the present invention assigns the packet numbers to the packets by providing the reserved information part to the specified region of packet. Moreover, the particular supervisor node 3 supervises assignment of reserved packets, notification of packet numbers and reserved assignment condition of packets, while ordinary interface node 2 reserves the packets having the numbers assigned to the self interface node and executes the packet send when the empty reserved packet arrives after reservation.

Namely, in the packet management by the supervisor node 3, reservation of packets can be made variably when required so long as a sum of the number of packets being used and to be used does not exceed the total number of packets and thereby the packet management assures flexible measures for the communication system where the synchronous continuous communication and burst communication coexist.

In view of explaining in detail the procedures for data transmission and reception, the structure of each part of Fig. 4 will then be explained in detail.

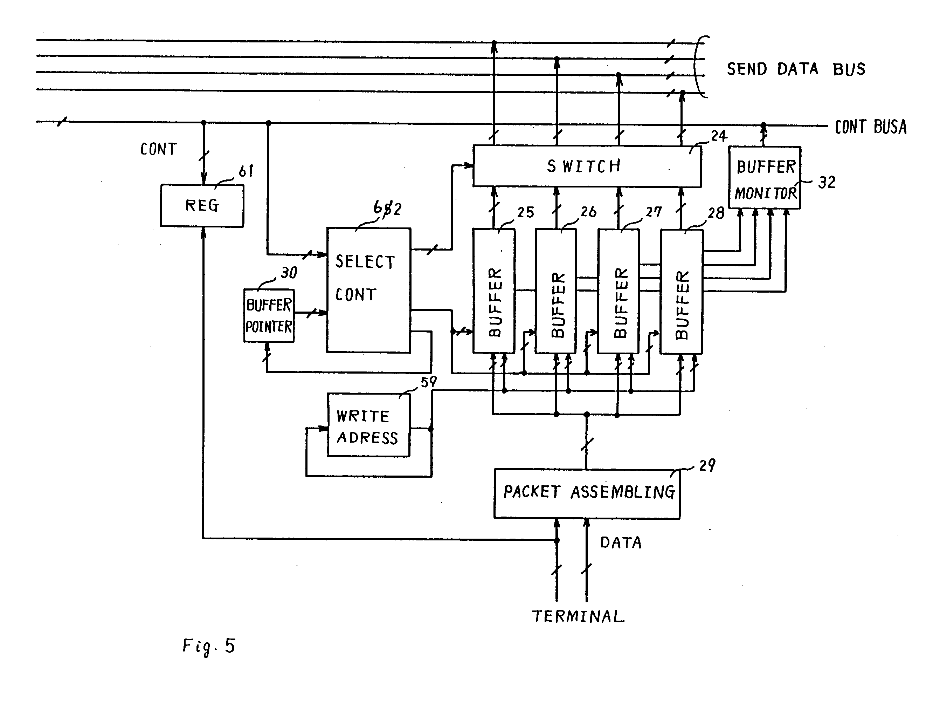

Send interface 42 (Fig.5):

As explained previously, the interface node 2 is provided with a plurality of terminal interfaces 40 and respective terminal interfaces are connected with terminals in different communication modes. Accordingly, prior to transmission, the terminal sets the signal which indicates the transmission mode (synchronous continuous communication or burst communication) to the register 61 in the send interface 42. Simultaneously, in case the send mode is the synchronous continuous communication, the terminal also sets the receive terminal address and amount of send data to the register 61. Upon setting the send request to the register 61, the terminal sends the send data and receive address to the packet assembling circuit 29. The packet assembling circuit 29 adds the header part and check bit to the send data and assembles the packet in the specified length as indicated in Fig. 3. In this case, the receive address is set to the field RA in the packet header, while the interface node address to which the packet itself belongs and the address of terminal connected are set to the field SA. Each flag of CTL field is controlled by the packet processing circuits 35 ~ 38.

The packets sequentially assembled in the sequence of the input data stream in the packet assembling circuit 29 are sequentially stored in the send buffers 25, 26, 27, 28, 25, ....., 26, 27, 28, in accordance with said sequential relation definition of packets.

In this case, the address of buffer for storing is designated by sequentially counting up the write address counter 59. The send buffers 25 ~ 28 temporarily store the packets to be input from the packet assembling circuit 29 and the output side of buffers 25 ~ 28 can be connected with any send data bus through the switch 24. The buffer monitor 32 monitors a number of packets stored in the send buffers 25 ~ 28 and notifies the result of monitoring to the control circuit 39 through the CONT BUSA. The buffer pointer 30 designates one buffer in which the packet to be read next is stored. The selection and control part 62 decodes the send packet indication signal input from the control circuit 39 through the CONT BUSA and a designated value of buffer pointer 30 to control the connection between the buffers 25 ~ 28 and send data buses S1 ~ S4 by changing over the switch 24 and gives the readout instruction to the buffer in which the packets to be sent are stored.

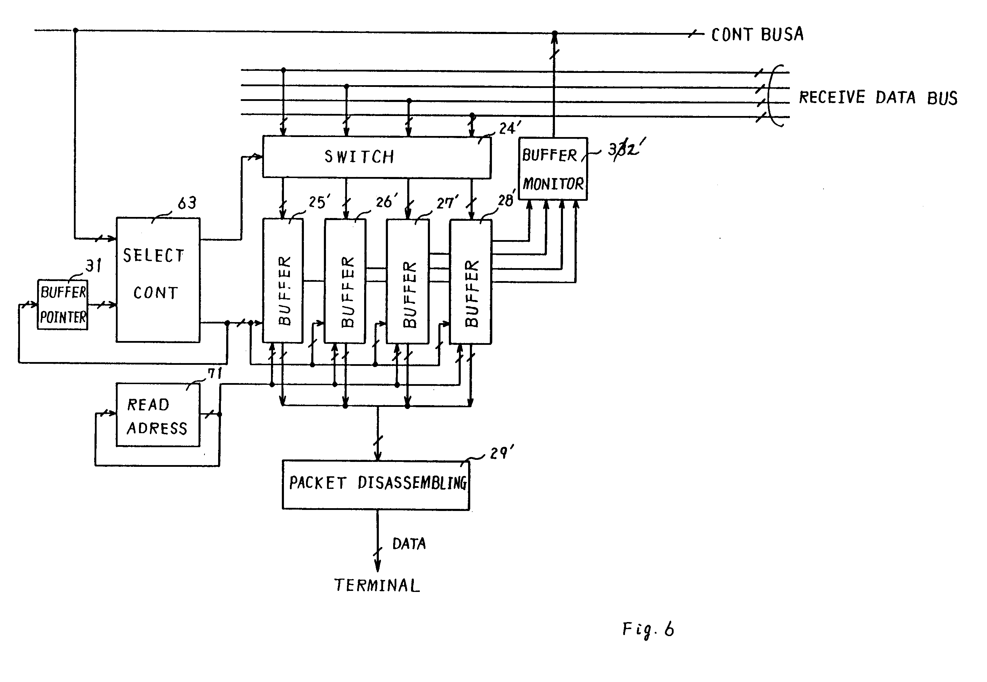

Receive interface 41 (Fig. 6):

Structure of receive interface 41 is similar to the send interface 42 indicated in Fig. 5 and therefore only difference is explained hereunder.

The input side of the receive buffers $25'$ ~ $28'$ can be connected with any receive data buffer through the switch $24'$. Moreover, the buffer monitor 32 monitors a number of packets stored in the receive buffers $25'$ ~ $28'$. The buffer pointer $30'$ designates the buffer for storing the packets to be received next. The selection and control circuit 63 decodes the receive packet indication signal sent from the control circuit 39 and content of buffer pointer $30'$, makes switching control of the switch 24 and the sends the write indication signal to the buffer to which the received packets are stored. As in the case of write address counter 59 indicated in Fig. 5, the read address counter 71 sequentially designates the buffers to read the packets like the receiver buffers $25'$, $26'$, $27'$, $28'$, $25'$,.... $27'$, $28'$. In above explanation, four send/receive buffers are provided to four parallel transmission lines S1, S2, S3, S4, but it is not always required that a number of parallel transmission lines corresponds to a number of buffers on the one to one basis and there is no such correspondence by providing a switch between the transmission line and buffers because each buffer can be connected to any transmission lines S1 ~ S4.

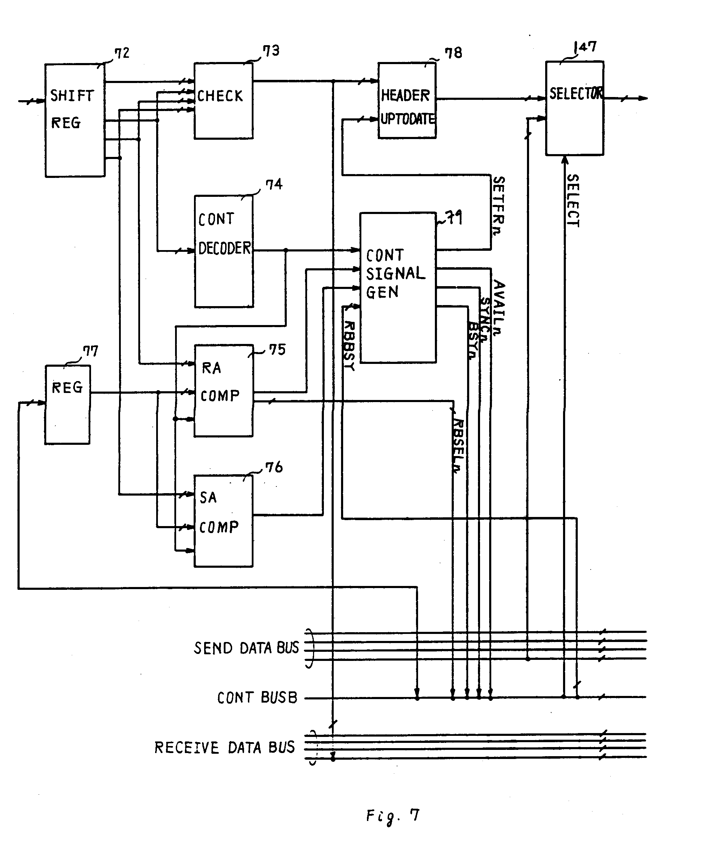

Packet processing circuits 35, 36, 37, 38 (Fig. 7):

Fig. 7 indicates the structure of the packet processing circuit. Since the packet processing circuit is the same, the structure of only one circuit is indicated. The timing signal which is sent to each part for deciding the bit position of received packet from the frame synchronization circuit 34 is here eliminated for simplification of figure.

The packets on the SLOTs 1 ~ 4 (Fig. 3) of the transmission lines S1 ~ S4 are input to the shift register 72. The shift register 72 is driven by the timing signal synchronized with the received packets and when

EP 0 254 878 B1

these packets are all input, contents of control field CTL are input to the control field decoder 74, contents of receive address field RA are input to the receive address comparison circuit 75, and contents of send address field are input to the send address comparison circuit 76. The address of interface node 2 and address of each terminal to be accommodated to the interface node 2 are previously set to the register 77 by MPU 43 through the CONT BUSB.

The control field decoder 74 displays condition of received packets in accordance with the following table by decoding contents of the control field CTN.

| | 0 | 1 |
|---|---|---|
| AV(valid/invalid indication | unused packet | Packet being used |
| CM1 (reservation indication flag) | unreserved packet | reserved synchronous continuous packet |
| CM2 (burst communication indication flag) | | Burst communication packet |
| PS (packet receiving condition indication falg) | | Receive buffer busy (not received) |
| ER (AV elimination node indication flag) | elimination of receive station | elimination of send station |

The receive address comparison circuit 75 compares the address of RA field of received packet and the address being set to the register 77, detects whether or not the received packet is destinated to the own interface node with reference to the output of the control field decoder 74 and also detects the terminal address being accommodated in the own interface node. When the receive addresses have matched, the receive address match signal BRSELn is sent together with the terminal address.

The send address comparison circuit 76 compares the address of SA field of received packet and the address being set to the register 77 and detects whether or not the packet is transmitted from own interface node with reference to the output of the control field decoder 74.

All bits of received packets are input to the check circuit 73 and parity check is carried out.

The control signal generating circuit 79 generates the following control signals in accordance with the decoding result of control field decoder 74, comparison result of receive address comparison circuit 75, comparison result of send address comparison circuit 76 and receive buffer busy signal from the control circuit 39 (RBBSYk). n is the slot number dealt with the packet processing circuit.

① Received slot available (AVAILn)

When the slot is unused

The packet to the own interface node is received without error and the AV flag can be deleted in the receive station

When the packet sent from the own node is received after circulation (when end of reception of each node is decided at the own station during communication to a plurality of nodes)

② Setting of each flag of control field CTL (SETFRn)

③ Indication of synchronous continuous slot (SYNCn)

④ Remote station receive buffer busy (BSYn)

The packets sent from the own node are not received due to the remote staion receive busy state.

The SETFRn among above signals is input to the packet header renewal circuit 78 to set the valid/invalid indication flag AV in the control field CTL of the header of receive packet to be input in the same way and reservation indication bit CM1.

With the SELECT signal from the control circuit 39, the switching control of the selection circuit 147 is carried out so that the packet from the header renewal circuit 78 is allowed to pass through the selection circuit 147 or the data from the header renewal circuit 78 is used only for the control field of the header and the packets on the send data bus are output for the other part, and thereby the packets are output to the transmission lines S1 ~ S4.

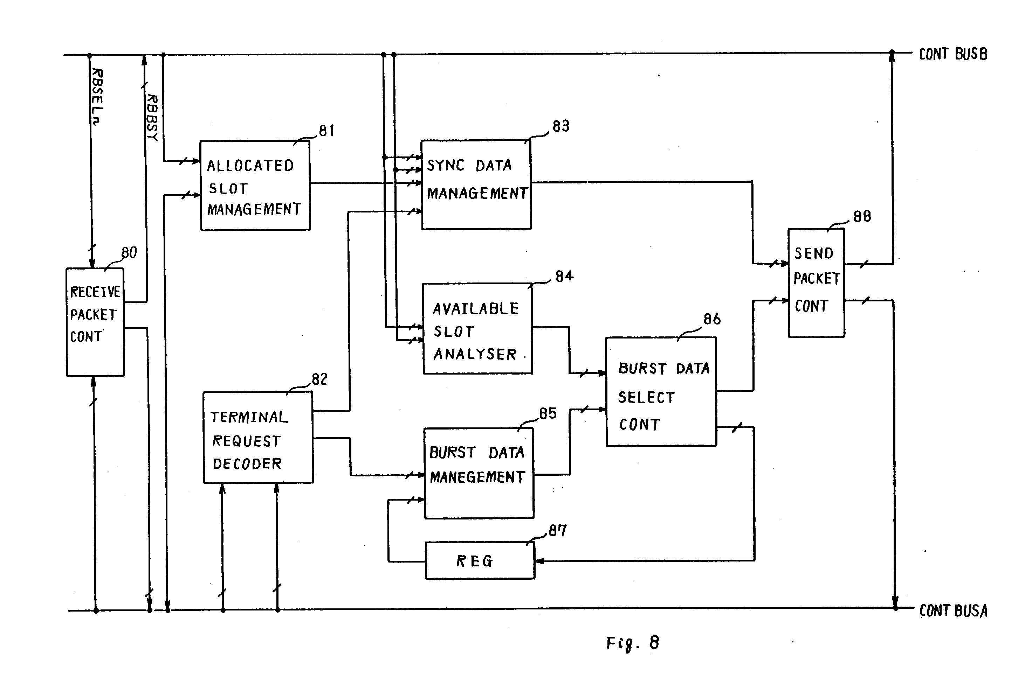

Control circuit CONT 39 (Fig. 8):

Since the control circuit CONT 39 is provided in common for the packet processing circuits 35 ~ 38 and a plurality of terminal interfaces 40, a plurality of control signals are also used to/from respective portions.

9

But in Fig. 8, such control signal is simplified. The receivable packets are input to the receive packet control circuit 80 from the buffer monitor 32′ of each receive interface 41 through CONT BUSA and the receive address coincidence signal RBSELn (including terminal address) is also input thereto from the packet processing circuit. The received packet control circuit 80 refers two control signals input and judges whether these can be received or not. When these are receivable, the slot number based on RBSELn is informed to the terminal interface 40 based on the receive address. If receive buffers are inshortage, the receive buffer busy signal (RBBSY) is issued to the corresponding packet processing circuit.

The terminal send request analysis circuit 82 reads the register 61 within each send interface 42 with a constant period. The communication mode and a number of requested slots are set to the register 61. Therefore, the terminal send request analysis circuit 82 inputs a number of send requests and a number of requested slots of synchronous continuous communications to the synchronous continuous communication management circuit 83 and moreover a number of send requests and a number of requested slots of the burst communication to the burst communication management circuit 85.

The allocated slot management circuit 81 is provided with a table for storing the frame counter given to each terminal interface for the synchronous continuous communication and the slot numbers (SLOT1, 2, 3, 4) in the frame. When the frame header is input to the frame synchronous circuit 34, the frame synchronous circuit 34 detects the frame counter and said frame is input to the allocated slot management circuit 81. With this frame counter used as the address, the allocated slot management circuit 81 reads that the j−th slot is allocated to the k−th terminal interface from the table and notifies it to the synchronous continuous communication management circuit 83.

Renewal of table content (renewal of allocated frame, slot information) is executed by MPU 43 through CONT BUSA and MPU43 reads table content and confirms the allocated frame and slot information.

The synchronous continuous communication management circuit 83 generates the send select signal for the synchronous continuous communication from the inputs sent from the terminal send request analysis circuit 82 and allocated slot management circuit 81 and AVAILn and SYNCn from the packet processing circuits 35 ~ 38.

Namely, when AVAILn and SYNCn are input from the packet processing circuit corresponding to the n−th slot, the allocated slot number and receive slot match and these are available, indicating that the terminal which has reserved the slot n in the table can be used for the synchronous continuous communication. Therefore the send select signal is transmitted to the terminal interface which accom− modates the reserved terminal. This send select signal is input to the select control circuit 62 of the send interface through the CONT BUSA.

The burst communication management circuit 85 sets the terminal interfaces with priority l ~ m for the burst communication depending on the information sent from the terminal send request analysis circuit 82 and inputs the burst data to the burst data selection control circuit 86.

The available slot analysis circuit 84 judges how many slots is avaialble for the burst communication from the AVAILn and SYNCHn signals and then inputs the signals to the burst data selection control circuit 86. Namely, when only AVAILn is input (SYNCHn is not input), the n−th slot is not reserved and it can be allocated for the burst communication.

The burst data selection and control circuit 86 allocates the available slots sequentially from the terminal interface having a higher order depending on the determined priority sequence and then outputs the send select signal for the burst communication. The select signals for synchronous continuous communication and burst communication are input to the send packet control circuit 88 and the send select signal for controlling the selection circuit 147 in the packet processing circuit and the send select signal input to the selection control circuit 62 in the send interface are output.

The register 87 holds the terminal interface of the lowest priority among the terminal interfaces to which the slots are allocated in the burst data selection and control circuit 86 and then determines the terminal interface with highest priority in the next frame.

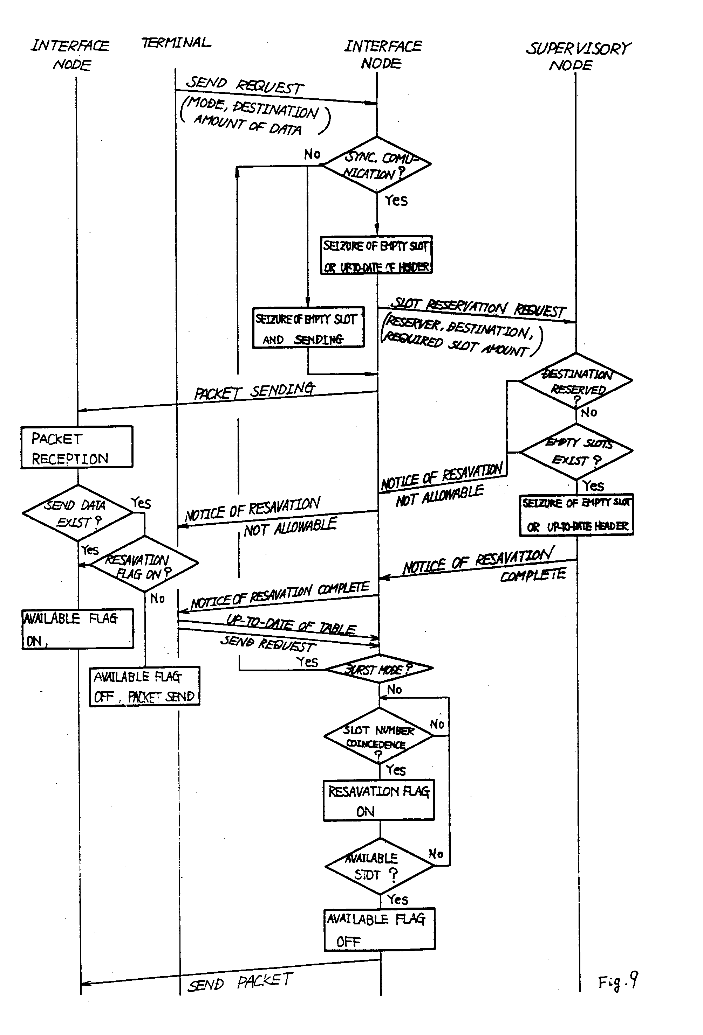

Respective circuits have been explained previously in detail and the packet send sequence is then explained with reference to Fig. 9.

① For the reservation for synchronous continuous communication by the terminal accommodated to the terminal interface 40, the send mode (the mode is the same as burst communication in the case of reservation), receive address and a number of packets required for transmission are set first to the register 61.

② The send data is input to the packet assembling circuit 29 in order to form a packet and it is then stored in the send buffers 25 ~ 28. In this case, the receive address RA in the packet header is the supervisor node and moreover the receive address and a number of packets required actually and data which indicates reservation request for the synchronous continuous communication exist within the information region of packet.

③ The control circuit 39 recognizes the send mode. Because of the burst communication, the priority sequence explained for Fig. 8 is given to the relevant terminal interface. The specified empty slot is seized depending on such priority sequence and the packet in the send buffer is received by the supervisor node.

④ The supervisor node is also provided with the structure as indicated in Fig. 4 like other interface node and the allocated slot management circuit 81 of the control circuit 39 is also provided with tables for all nodes. In addition, MPU is accommodated in the terminal interface within the supervisor node. Therefore, information of packet destinated to own node is notified to CPU through the terminal interface. CPU makes reference to the table of allocated slot management circuit 81 of the control circuit 39 and checks whether the actual party for communication of the relevant terminal has already reserved the packet or not. When the communication party does not yet reserve the packet, leaving the requested number of packets unreserved, the table is renewed, the relevant terminal is reserved and registered, end of reservation is notified to the relevant terminal with the ordinary burst communication and the packet number allocated by reservation, frame number and slot number are also notified. When the other party has already reserved the packet or the reserved number of packets are not available, reservation disable signal is sent to the relevant terminal.

⑤ The relevant terminal which has received the end of reservation requests renewal of table to MPU. The slot number and relevant terminal address are stored to the table with the allocated frame number used as the address.

⑥ Data is set to the register 61 depending on the synchronous continuous communication request of the relevant terminal. Upon decision of synchronous continuous communication, the control circuit 39 turns on the reservation indication flag of packet header of the packet of a slot number after the relevant terminal address and such slot number are read from the table with the frame number used as the address. The control circuit waits until the valid/invalid indication flag of packet of this slot indicates invalid condition.

⑦ When it is detected that the valid/invalid indication flag indicates invalid condition, the packet stored in the send buffer is transmitted. In this case, the header is updated so that the valid/invalid indication flag indicates the valid condition.

⑧ In the case of ordinary burst communication which does not set reservation, the packet is sent with the receive address considered as the ordinary terminal as in the case of step 3 .

⑨ The interface node which has received this packet sends this packet to the receive terminal and checks whether there are send data from the terminal in the own node.

⑩ In case there is no send data, the valid/invalid indication flag indicates the invalid condition and the received packet is directly sent.

⑪ In case there is send data, it is checked whether such send data is reserved or not. In case this data is reserved , the processing same as that in the step 10 is carried out.

⑫ In case such send data is not reserved, the valid/invalid indication flag of received packet indicates the valid condition and data is transmitted.

According to the above method, in order to perform the communication between the interface node and the supervisory node for sending the request of reserving the slots from the interface node or for informing the interface node the allowance of reservation and the reserved slot number from the supervisory node, it is necessary to access the empty slots so that it is required to wait until the empty slots are indicated.

So, as described with Fig. 3, it is efficient to use the field for the command of frame header. Namely, the field is allocated to the interface nodes and the supervisory node for the management of the network, so that this field is not used as many as the slots.

Then, describing the structure to perform above method with reference to Fig. 4. O/E 130 outputs the frame of Fig. 3 to the frame header processing 148 The Frame header processing 148 is driven by the timing signals from the frame synchronizing circuit 34 and is set the field of command (command field) of frame header at the shift register 11. The contents of the command field are decoded at the frame header processing 148 and output the decoded signal to the CONT 39 via CONT BUSB.

When the request of reservation of the slots are sent to the CONT 39, CONT 39 is gating the output corresponding to the command field from the shift register 11 and, on behalf of the gating output of the shift register 11 CONT 39 is set the command for reservation to the shift register 12. Then, the shift register 12 output the up−to−date frame header in series to the switch 150 in accordance with the timing signal from the frame synchronizing circuit.

At this time, switch 150 select the output of the frame header processing 148.

After output from the frame header processing 148 ends, the switch 150 immediatly select the output from P/S converter 33 so that the frame header is added to the packet header and the frame is completly reconstructed.

## Claims

1. Packet data communication system comprising:
   a ring type transmission line (1) for circulating frames respectively including frame header and a predetermined number of slots on which packets to be transmitted are loaded, and
   a plurality of interface nodes (2, 2'), provided between said ring type transmission line (1), for loading packets on slots and receiving packets from slots for terminals connecting thereto, wherein each of interface nodes (2, 2') include,
   a predetermined number of sub−transmission lines (S1−S4), for passing each of slots in parallel through the interface node terminal interfaces (40, 41, 42),
   synchronisation means (34) and
   switch means (24, 24'; 44−47)
   **characterized** in that each of said interface nodes (2, 2') respectively comprises
   a plurality of sending buffers (25−28) for storing packets to be transmitted and a plurality of receiving buffers (25'−28') for storing packets to be received,
   packet processing means (23, 23'; 35−38) for detecting whether the slots on each of the sub−transmission lines are available or not and packet addressed on the slots, wherein
   said synchronization means (34) are adapted for synchronizing the clock of the packet processing means (23, 23'; 35−38) to input frames using said frame header and for generating a plurality of timing signals to said packet processing means (23, 23'; 35−38), and
   said switch means (24, 24'; 44−47), controlled by said packed processing means (23, 23'; 35−38), are adapted for connecting each of said sending buffers (25−28) and receiving buffers (25'−28') to any one of said sub−transmission lines (S1−S4).

2. Packet data communication system as set forth in claim 1, characterized by each of the slots consisting of a packet header area including a control field for indicating the condition of the slots and an address field for indicating the packet send terminals and packet receive terminals, and a packet information area,
   said packet processing means (23, 23$'$; 35−38) being adapted to analyse said packet header area.

3. Packet data communication system as set forth in claim 2, wherein
   said sending buffers (25−28) are adapted to sequentially store the packets in accordance with transmitting order of each packets,
   said slots have a predetermined priority sequence, and,
   said packet processing means (23, 23$'$; 35−38) are adapted to control said switch means (24, 24$'$; 44−47) for connecting the sending buffers (25−28) storing the packets of the first transmitting order to the sub−transmission lines (S1−S4) passing the slots of the higher priority sequence to which packets are not loaded.

4. Packet data communication system as set forth in claim 3, wherein
   each of said receiving buffers (25$'$−28$'$) has a packet receiving order, and
   said packet processing means (23, 23$'$; 35−38) are adapted to control said switch means (24, 24$'$; 44−47) for connecting the sub−transmission lines (S1−S4) passing the slots of the higher priority sequence on which the packets to be received are loaded to the receiving buffers (25$'$−28$'$) having the higher packet receiving order.

5. Packet data communication system as set forth in claim 2, wherein
   said control field includes
   a first flag for indicating whether the slot is available or not, and
   a second flag for indicating whether the slot is reserved for synchronizing data communication.

6. Packet data communication system as set forth in claim 5, wherein
   said packet processing means (23, 23$'$; 35−38) include a control field analyser (74) for decoding said control field, and an address field analyser (75) for decoding whether the received packet is for the

EP 0 254 878 B1

connecting terminals or not, the control means (39) having a table for memorizing the reserved slots number for the connecting terminals, and a

terminal request decoder (82) for detecting which terminal request to send packets and whether synchronizing data communication is requested or not,

whereby said control means (39) are adapted to control the switch means (24, 24′; 44 − 47) in accordance with the signal from said control field analyser (74) and address field analyser (75).

7. Packet data communication system as set forth in claim 6, wherein

said packet processing means (23, 23′; 35 − 38) include up − to − date means (78) for rewriting each flag of the control field in accordance with the signal from said control field analyser (74), address field analyser (75) and control means (39).

8. Packet data communication system as set forth in claim 7, wherein

said sending buffers (25 − 28) are adapted to sequentially store the packets in accordance with the transmitting order of each packet,

said slots have a predetermined priority sequence, and said control means (39) are adapted to control said switch means (24, 24′; 44 − 47) of the terminal interface (40) to which the requesting terminal connects the buffers storing the packets of the first transmitting order to the sub − transmission lines (51 − 54) for passing the slots of the higher priority sequence in order to load the packets stored in the sending buffers (25 − 28) when said field analyser indicate said slots are available.

9. Packet data communication system as set forth in claim 8, wherein,

when said control means (39) detect

that synchronizing data communication is requested from the terminal, that passing slots on the sub − transmission lines (S1 − S4) are reserved for said requesting terminal with reference to said table and that said passing slots are available,

said control means (39) are adapted to control the switch means (24, 24′; 44 − 47) of the sending buffer (25 − 28) of said terminal.

10. Packet data communication system as set forth in claim 7, wherein,

when said control means (39) detect that synchronizing data communication are requested from the terminals, that passing slots on the sub − transmission lines (S1 − S4) are reserved to said requesting terminal and that said passing slots are not available or packet receive terminals of passing slots are coincident with the connecting terminals,

said control means (39) are adapted to control up − to − date means to settle said second flag of said slots for indicating reserved slots.

11. Packet data communication system as set forth in claim 8, wherein,

when said address field analyser (75) detects that packet receive terminals of passing slots are coincident with the connecting terminals

each of receiving buffers (25′ − 28′) have the packet receiving order,

said control means (39) are adapted to control said switch means (24, 24′; 44 − 47) of the terminal interfaces of said connecting terminals for connecting the sub − transmission lines (S1 − S4) passing slots of the higher priority sequence to the receiving buffers having the higher packet receiving order in order to receive the packets from said slots.

12. Packet data communication system as set forth in claim 11, wherein,

when said terminal request decoder (82) detects that no terminal requests to send packets, said control means (39) are adapted to control up − to − date means to settle said first flag of said slots for indicating available slots.

13. Packet data communication system as set forth in claim 11, wherein,

when said terminal request decoder (82) detects that the terminals request to send packets,

said control means (39) are adapted to control up − to − date means to settle said first flag of said slots for indicating inavailable slots, and adapted to control said switch means (24, 24'; 44 − 47) to connect the sending buffers to said sub − transmission lines (S1 − S4).

13

EP 0 254 878 B1

**14.** Packet data communication system as set forth in claim 6, further comprising a supervisor node (3), provided between said ring type transmission line (1), for supervising the packet header areas of each slots in order to detect the conditions of each slots and memorizing them in table and for managing non – reserved slots by said table so as to allow each interface nodes reserve said non – reserved slots.

**15.** Packet data communication system as set forth in claim 14, wherein
said interface nodes (2) are adapted to send the packets indicating the requests of the slot reservation, the number of necessary slots corresponding to the amount of the synchronizing data and receive terminals, and
said supervisor node (3), when it receives said packets, is adapted to check the contents of said packets with reference to said table, to allocate some of the non – reserved slots to said interface nodes and to inform said interface of the reserved slot numbers by the packets.

**16.** Packet data communication system as set forth in claim 15, wherein,
when said interface nodes (2) receive the packets from said supervisor node (3), said control means (39) are adapted to store the reserved slot numbers at said table.

**17.** Packet data communication system as set forth in claim 16, wherein
the communication between said interface nodes (2, 2$'$) and said supervisor node (3) are performed to use the address field and the packet information area of each slots.

**18.** Packet data communication system as set forth in claim 16, wherein
each of said frame header includes the command area using for communicating between said interface nodes and said supervisor node.

## Patentansprüche

**1.** Paketdaten – Kommunikationssystem mit:
einer Ringübertragungsleitung (1), um Blöcke zirkulieren zu lassen, die jeweils einen Blockvorspann und eine vorbestimmte Anzahl an Schlitzen enthalten, auf welche zu übertragende Pakete aufgepackt werden, und
mehreren Schnittstellenknoten (2, 2'), die zwischen der Ringübertragungsleitung (1) vorgesehen sind, zum Aufpacken von Paketen auf Schlitze und zum Empfangen von Paketen von Schlitzen für hiermit verbundene Endgeräte, wobei jeder der Schnittstellenknoten (2, 2') umfaßt
eine vorbestimmte Anzahl Unter – Übertragungsleitungen (S1 – S4), um jeden der Schlitze parallel durch die Schnittstellenknoten – Endgeräteschnittstellen (40, 41, 42) hindurchgelangen zu lasen,
Synchronisierungseinrichtungen (34), und
Schaltereinrichtungen (24, 24'; 44 – 47),
dadurch gekennzeichnet, daß jeder der Schnittstellenknoten (2, 2') jeweils aufweist
mehrere Sendepuffer (25 – 28) zum speichern zu übertragender Pakete sowie mehrere Empfangs – puffer (25' – 28') zum Speichern zu empfangender Pakete,
Paketbearbeitungseinrichtungen (23, 23'; 35 – 38) zur Ermittlung, ob die Schlitze auf jeder der Unter – Übertragungsleitungen verfügbar sind oder nicht, und von auf den Schlitzen adressierten Paketen, wobei
die Synchronisiereinrichtungen (34) zum Synchronisieren des Taktes der Paketbearbeitungseinrichtun – gen (23, 23'; 35 – 38) ausgebildet sind, um Blöcke einzugeben, welche den Blockvorspann benutzen, und um mehrere Taktsignale für die Paketbearbeitungseinrichtungen (23, 23'; 35 – 38) zu erzeugen, und
die von den Paketbearbeitungseinrichtungen (23, 23'; 35 – 38) gesteuerten Schalteinrichtungen (24, 24'; 44 – 47) dazu ausgebildet sind, jeden der Sendepuffer (25 – 28) und Empfangspuffer 25' – 28') mit jeder der Unter – Übertragungsleitungen (S1 – S4) zu verbinden.

**2.** Paketdaten – Kommunikationssystem nach Anspruch 1, dadurch gekennzeichnet, daß jeder der Schlitze aus einem Paketvorspannbereich einschließlich eines Steuerfeldes zur Anzeige des Zustands der Schlitze und eines Adressenfeldes zur Anzeige der Paketsendeendgeräte und der Paketempfangsend – geräte, und eines Paketinformationsbereiches besteht,
wobei die Paketbearbeitungseinrichtung (23, 23'; 35 – 38) zur Analyse des Paketvorspannbereiches ausgebildet ist.

14

3. Paketdatenkommunikationssystem nach Anspruch 2, bei welchem
die Sendepuffer (25 – 28) zum sequentiellen Speichern der Pakete entsprechend der Übertragungs – reihenfolge jedes Pakets ausgebildet sind,
die Schlitze eine vorbestimmte Prioritätssequenz aufweisen, und
die Paketbearbeitungseinrichtungen (23, 23'; 35 – 38) zur Steuerung der Schalteinrichtungen (24, 24'; 44 – 47) ausgebildet sind, um die Sendepuffer (25 – 28), welche die Pakete der ersten Übertra – gungsreihenfolge speichern, mit den Unter – Übertragungsleitungen (S1 – S4) zu verbinden, welche die Schlitze der höheren Prioritätssequenz durchlassen, auf welche keine Pakete aufgepackt sind.

4. Paketdatenkommunikationssystem nach Anspruch 3, bei welchem jeder der Empfangspuffer (25' – 28') eine Paketempfangsreihenfolge aufweist, und
die Paketbearbeitungseinrichtungen (23, 23'; 35 – 38) zum Steuern der Schalteinrichtungen (24, 24'; 44 – 47) ausgebildet sind, um die Unter – Übertragungsleitungen (S1 – S4), welche die Schlitze der höheren Prioritätssequenz durchlassen, auf welche die zu empfangenden Pakete aufgepackt sind, mit den Empfangspuffern (25' – 28') zuverbinden, welche die höhere Paketempfangsreihenfolge aufwei – sen.

5. Paketdaten – Kommunikationssystem nach Anspruch 2, bei welchem das Steuerfeld umfaßt
eine erste Marke zur Anzeige, ob der Schlitz verfügbar ist oder nicht, und
eine zweite Marke zur Anzeige, ob der Schlitz für eine synchrone Datenkommunikation reserviert ist.

6. Paketdaten – Kommunikationssystem nach Anspruch 5, bei welchem
die Paketbearbeitungseinrichtungen (23, 23'; 35 – 38) einen Steuerfeldanalysator (74) zum Dekodieren des Steuerfeldes umfassen, sowie einen Adressenfeldanalysator (75) zum Dekodieren, ob das emp – fangene Paket für die angeschlossenen Endgeräte bestimmt ist oder nicht, wobei die Steuereinrichtung (39) eine Tabelle zum Speichern der reservierten Schlitznummer für die angeschlossenen Endgeräte aufweist, sowie einen
Endgeräteanforderungsdekodierer (82) zur Ermittlung, welches Endgerät ein Senden von Paketen anfordert, und ob synchronisierte Datenkommunikation angefordert wird oder nicht,
wobei die Steuereinrichtungen (39) zum Steuern der Schalteinrichtungen (24, 24'; 44 – 47) entspre – chend dem Signal von dem Steuerfeldanalysator (74) und dem Adressenfeldanalysator (75) ausgebildet sind.

7. Paketdatenkommunikationssystem nach Anspruch 6, bei welchem
die Paketbearbeitungseinrichtungen (23, 23', 35 – 38) eine Aktualisierungseinrichtung (78) aufweisen, um jede Marke des Steuerfeldes entsprechend dem Signal von dem Steuerfeldanalysator (74), dem Adressenfeldanalysator (75), und der Steuereinrichtung (39) erneut zu setzen.

8. Paketdatenkommunikationssystem nach Anspruch 7, bei welchem
die Sendepuffer (25 – 28) zum sequentiellen Speichern der Pakete entsprechend der Übertragungs – reihenfolge jedes Pakets ausgebildet sind,
die Schlitze eine vorbestimmte Prioritätssequenz aufweisen, und
die Steuereinrichtungen (39) zum Steuern der Schalteinrichtungen (24, 24'; 44 – 47) der Endgeräte – Schnittstelle (40) ausgebildet sind, mit welcher das anfordernde Endgerät die Puffer, welche die Pakete der ersten Übertragungsreihenfolge speichern, mit den Unter – Übertragungsleitungen (41 – 54) zum Durchlassen der Schlitze der höheren Prioritätssequenz verbindet, um die in den Sendepuffern (25 – 28) gespeicherten Pakete aufzupacken, wenn der Feldanalysator anzeigt, daß diese Schlitze verfügbar sind.

9. Paketdatenkommunkationssystem nach Anspruch 8, bei welchem dann, wenn die Steuereinrichtung (39) feststellt,
daß die Synchrondatenkommunikation von dem Endgerät angefordert wird, daß durchgelassen Schlitze auf den Unter – Übertragungsleitungen (S1 – S4) für das anfordernde Endgerät reserviert sind, unter Bezugnahme auf die Tabelle, und daß die hindurchgelangenden Schlitze verfügbar sind,
die Steuereinrichtungen (39) zum Steuern der Schalteinrichtungen (24, 24'; 44 – 47) der Sendepuffer (25 – 28) des Endgerätes ausgebildet sind.

10. Paketdatenkommunikationssystem nach Anspruch 7, bei welchem dann, wenn die Steuereinrichtungen (39) feststellen, daß Synchronisierungsdaten – Kommunikation von den Endgeräten angefordert wird, daß hindurchgelangende Schlitze auf den Unter – Übetragungsleitungen (S1 – S4) für das anfordernde Endgerät reserviert sind, und daß die hindurchgelangenden Schlitze nicht verfügbar sind, oder daß Paketempfangsendgeräte hindurchgelangender Schlitze mit den ange – schlossenen Endgeräten zusammenfallen, die Steuereinrichtungen (39) zum Steuern der Aktualisierungseinrichtung ausgebildet sind, um die zweite Marke der Schlitze zur Anzeige reservierter Schlitze einzustellen.

11. Paketdatenkommunikationssystem nach Anspruch 8, bei welchem dann, wenn der Adressenfeldanaly – sator (75) feststellt, daß Paketempfangsendgeräte hindurchgelangender Schlitze mit den angeschlos – senen Endgeräten zusammenfallen, und jeder der Empfangspuffer (25' – 28') die Paketempfangsreihenfolge aufweist, die Steuereinrichtungen (39) zum Steuern der Schalteinrichtungen (24, 24'; 44 – 47) der Endgeräte – schnittstellen der angeschlossenen Endgeräte ausgebildet sind, um die Unter – Übertragungsleitungen (S1 – S4) zu verbinden, welche Schlitze der höheren Prioritätssequenz an die Empfangspuffer durchlassen, welche die höhere Paketempfangsreihenfolge aufweisen, um die Pakete von diesen Schlitzen zu empfangen.

12. Paketdatenkommunikationssystem nach Anspruch 11, bei welchem wenn der Engferäteanforderungsdekodierer (82) ermittelt, daß kein Endgerät das Senden von paketen anfordert, die Steuereinrichtungen (39) zum Steuern der Aktualisierungseinrichtung ausgebildet sind, um die erste Marke der Schlitze zur Anzeige verfügbarer Schlitze einzustellen.

13. Paketdatenkommunikationssystem nach Anspruch 11, bei welchem wenn der Endgeräteanforderungsdekodierer (82) feststellt, daß die Endgeräte das Senden von Paketen anfordern, die Steuereinrichtungen (39) zum Steuern der Aktualisierungseinrichtung ausgebildet sind, um die erste Marke der Schlitze zum Anzeigen nicht verfügbarer Schlitze einzustellen, und zum Steuern der Schalteinrichtungen (24, 24'; 44 – 47) ausgebildet sind, um die Sendepuffer mit den Unter – Übertragungsleitungen (S1 – S4) zu verbinden.

14. Paketdatenkommunikationssystem nach Anspruch 6, welches weiterhin einen Überwachungsknoten (3) aufweist, der zwischen der Ringübertragungsleitung (1) vorgesehen ist, um die Paketvorspannbe – reiche jedes Schlitzes zu überwachen, um die Zustände jedes Schlitzes zu ermitteln, diese in der Tabelle zu speichern, und um nicht reservierte Schlitze durch die Tabelle zu behandeln, um so jedem Schnittstellenknoten die Reservierung der nicht reservierten Schlitze zu gestatten.

15. Paketdatenkommunikationssystem nach Anspruch 14, bei welchem die Schnittstellenknoten (2) dazu ausgebildet sind, die Pakete zu senden, welche die Anforderungen der Schlitzreservierung anzeigen, wobei die Anzahl erforderlicher Schlitze der Menge der Synchroni – sierungsdaten und der Empfangs – Endgeräte entspricht, und bei welchem der Überwachungsknoten (3), wenn er die Pakete empfängt, zum Überprüfen des Inhalts der Pakete unter Bezug auf die Tabelle ausgebildet ist, um einige der nicht reservierten Schlitze den Schnittstellenknoten zuzuordnen und die Schnittstelle bezüglich der reservierten Schlitznummern durch die Pakete zu informieren.

16. Paketdatenkommunikationssystem nach Anspruch 15, bei welchem dann, wenn die Schnittstellenknoten (2) die Pakete von dem Überwachungsknoten (3) zu empfangen, die Steuereinrichtungen (39) zum Speichern der reservierten Schlitznummern in der Tabelle ausgebildet sind.

17. Paketdatenkommunikationssystem nach Anspruch 16, bei welchem die Kommunikation zwischen den Schnittstellenknoten (2, 2') und dem Überwachungsknoten (3) so durchgeführt wird, daß das Adressenfeld und der Paketinformationsbereich jedes Schlitzes verwendet wird.

**18.** Paketdatenkommunikationssystem nach Anspruch 16, bei welchem
jeder der Blockvorspanne den Befehlsbereich umfaßt, der zur Kommunikation zwischen den Schnitt‑
stellenknoten und dem Überwachungsknoten verwendet wird.

**Revendications**

**1.** Système de communication de données paquets comprenant :

une ligne de transmission du type en anneau (1) pour faire circuler des images incluant respecti‑
vement un en‑tête d'image et un nombre prédéterminé d'intervalles temporels sur lesquels des
paquets qui doivent être transmis sont chargés ; et

une pluralité de noeuds d'interface (2, 2'), prévus sur ladite ligne de transmission du type en
anneau (1), pour charger les paquets sur les intervalles temporels et pour recevoir des paquets depuis
des intervalles temporels pour des terminaux qui lui sont connectés,

dans lequel chacun des noeuds d'interface (2, 2') inclut :

un nombre prédéterminé de sous‑lignes de transmission (S1‑S4) pour faire passer chacun des
intervalles temporels en parallèle au travers des interfaces de terminal de noeud d'interface (40, 41,
42),

un moyen de synchronisation (34); et

un moyen de commutation (24, 24'; 44‑47),

caractérisé en ce que chacun desdits noeuds d'interface (2, 2') comprend respectivement :

une pluralité de tampons d'émission (25‑28) pour stocker des paquets qui doivent être transmis et
une pluralité de tampons de réception (25'‑28') pour stocker des paquets qui doivent être reçus ;

un moyen de traitement de paquet (23, 23' ; 35‑38) pour détecter si oui ou non les intervalles
temporels situés sur chacune des sous‑lignes de transmission sont disponibles et si oui ou non un
paquet est adressé sur les intervalles temporels, dans lequel

ledit moyen de synchronisation (34) est conçu pour synchroniser l'horloge du moyen de traitement
de paquet (23, 23'; 35‑38) sur des images d'entrée en utilisant ledit en‑tête d'image et pour générer
une pluralité de signaux de cadencement pour ledit moyen de traitement de paquet (23, 23' ; 35‑38) ;
et

ledit moyen de commutation (24, 24' ; 44‑47), commandé par ledit moyen de traitement de
paquet (23, 23' ; 35‑38), est conçu pour connecter chacun desdits tampons d'émission (25‑28) et
desdits tampons de réception (25'‑28') à l'une quelconque desdites sous‑lignes de transmission
(S1‑S4).

**2.** Système de communication de données paquets selon la revendication 1, caractérisé en ce que
chacun des intervalles temporels est constitué par une zone d'en‑tête de paquet incluant un champ
de commande pour indiquer la condition des intervalles temporels et un champ d'adresse pour indiquer
les terminaux d'émission de paquet et les terminaux de réception de paquet et par une zone
d'information de paquet ;

ledit moyen de traitement de paquet (23, 23' ; 35‑38) étant conçu pour analyser ladite zone
d'en‑tête de paquet.

**3.** Système de communication de données paquets selon la revendication 2, dans lequel :

lesdits tampons d'émission (25‑28) sont conçus pour stocker séquentiellement les paquets en
relation avec l'ordre de transmission de chaque paquet ;

lesdits intervalles temporels présentent une séquence de priorité prédéterminée ; et

ledit moyen de traitement de paquet (23, 23' ; 35‑38) est conçu pour commander ledit moyen de
commutation (24, 24' ; 44‑47) pour connecter les tampons d'émission (25‑28) qui stockent les
paquets du premier ordre de transmission aux sous‑lignes de transmission (S1‑S4) qui passent les
intervalles temporels de la séquence de priorité plus élevée sur lesquels des paquets ne sont pas
chargés.

**4.** Système de communication de données paquets selon la revendication 3, dans lequel :

chacun desdits tampons de réception (25'‑28') présente un ordre de réception de paquet ; et

ledit moyen de traitement de paquet (23, 23' ; 35‑38) est conçu pour commander ledit moyen de
commutation (24, 24' ; 44‑47) pour connecter les sous‑lignes de transmission (S1‑S4) qui passent
les intervalles temporels de la séquence de priorité plus élevée sur lesquels les paquets qui doivent
être reçus sont chargés sur les tampons de réception (25'‑28') présentant l'ordre de réception de paquet plus éleve.

5. Système de communication de données paquets selon la revendication 2, dans lequel :

ledit champ de commande inclut :

un premier indicateur pour indiquer si oui ou non l'intervalle temporel est disponible ; et

un second indicateur pour indiquer si oui ou non l'intervalle temporel est réservé pour synchroniser une communication de données.

6. Système de communication de données paquets selon la revendication 5, dans lequel :

ledit moyen de traitement de paquet (23, 23' ; 35−38) inclut un analyseur de champ de commande (74) pour décoder ledit champ de commande et un analyseur de champ d'adresse (75) pour décoder si oui ou non le paquet reçu est destiné à la connexion de terminaux, le moyen de commande (39) comportant une table pour mémoriser les numéros des intervalles temporels réservés pour la connexion de terminaux ; et

un décodeur de requête de terminal (82) pour détecter quel terminal envoie une requête d'émission de paquet et si oui ou non une communication de données de synchronisation est requise,

d'où il résulte que ledit moyen de commande (39) est conçu pour commander le moyen de commutation (24, 24' ; 44−47) en relation avec le signal en provenance dudit analyseur de champ de commande (74) et dudit analyseur de champ d'adresse (75).

7. Système de communication de données paquets selon la revendication 6, dans lequel :

ledit moyen de traitement de paquet (23, 23' ; 35−38) inclut un moyen de mise à jour (78) pour ré−écrire chaque indicateur du champ de commande en relation avec le signal en provenance dudit analyseur de champ de commande (74), dudit analyseur de champ d'adresse (75) et dudit moyen de commande (39).

8. Système de communication de données paquets selon la revendication 7, dans lequel :

lesdits tampons d'émission (25−28) sont conçus pour stocker séquentiellement les paquets en relation avec l'ordre de transmission de chaque paquet ;

lesdits intervalles temporels présentent une séquence de priorité prédéterminée et ledit moyen de commande (39) est conçu pour commander ledit moyen de commutation (24, 24' ; 44−47) de l'interface de terminal (40) sur lequel le terminal émetteur de requête connecte les tampons qui stockent les paquets du premier ordre de transmission pour les sous−lignes de transmission (51−54) pour passer les intervalles temporels de la séquence de priorité plus élevée afin de charger les paquets stockés dans les tampons d'émission (25−28) lorsque ledit analyseur de champ indique que lesdits intervalles temporels sont disponibles.

9. Système de communication de données paquets selon la revendication 8, dans lequel :

lorsque ledit moyen de commande (39) détecte qu'une communication de données de synchroni−sation est demandée par requête depuis le terminal, que des intervalles temporels de passage sur les sous−lignes de transmission (S1−S4) sont réservés pour ledit terminal émetteur de requête par rapport à ladite table et que lesdits intervalles temporels de passage sont disponibles,

ledit moyen de commande (39) est conçu pour commander le moyen de commutation (24, 24' ; 44−47) du tampon d'émission (25−28) dudit terminal.

10. Système de communication de données paquets selon la revendication 7, dans lequel :

lorsque ledit moyen de commande (39) détecte qu'une communication de données de synchroni−sation est demandée par requête depuis les terminaux, que des intervalles temporels de passage sur les sous−lignes de transmission (S1−S4) sont réservés pour ledit termina émetteur de requête et que lesdits intervalles temporels de passage ne sont pas disponibles ou que les terminaux de réception de paquet pour les intervalles temporels de passage coincident avec les terminaux de connexion,

ledit moyen de commande (39) est conçu pour commander un moyen de mise−à−jour afin d'établir ledit second indicateur desdits intervalles temporels afin d'indiquer des intervalles temporels réservés.

11. Système de communication de données paquets selon la revendication 8, dans lequel :

lorsque ledit analyseur de champ d'adresse (75) détecte que les terminaux de réception de paquet pour les intervalles temporels de passage coincident avec les terminaux de connexion,

18

chacun des tampons de réception (25' – 28') a l'ordre de réception de paquet,

ledit moyen de commande (39) est conçu pour commander ledit moyen de commutation (24, 24' ; 44 – 47) des interfaces de terminal desdits terminaux de connexion pour connecter les intervalles temporels de passage de sous – lignes de transmission (S1 – S4) de la séquence de priorité plus élevée aux tampons de réception présentant l'ordre de réception de paquet plus élevé afin de recevoir les paquets en provenance desdits intervalles temporels.

12. Système de communication de données paquets selon la revendication 11, dans lequel :

lorsque ledit décodeur de requête de terminal (82) détecte qu'aucun terminal n'émet de requête pour émettre des paquets, ledit moyen de commande (39) est conçu pour commander un moyen de mise à jour afin d'établir ledit premier indicateur desdits intervalles temporels pour indiquer des intervalles temporels disponibles.

13. Système de communication de données paquets selon la revendication 11, dans lequel :

lorsque ledit décodeur de requête de terminal (82) détecte que les terminaux émettent une requête afin d'émettre des paquets,

ledit moyen de commande (39) est conçu pour commander un moyen de mise à jour afin d'établir ledit premier indicateur desdits intervalles temporels pour indiquer des intervalles temporels disponibles et est conçu pour commander ledit moyen de commutation (24, 24' ; 44 – 47) afin de connecter les tampons d'émission auxdites sous – lignes de transmission (S1 – S4).

14. Système de communication de données paquets selon la revendication 6, comprenant en outre un noeud de surveillance (3) prévu entre ladite ligne de transmission du type en anneau (1) pour surveiller les zones d'en – tête de paquet de chaque intervalle temporel afin de détecter les conditions de chaque intervalle temporel et de les mémoriser dans une table et pour gérer des intervalles temporels non réservés au moyen de ladite table de manière à permettre à chaque noeud d'interface de réserver lesdits intervalles temporels non réservés.

15. Système de communication de données paquets selon la revendication 14, dans lequel :

lesdits noeuds d'interface (2) sont conçus pour émettre les paquets indiquant les requêtes de réservation d'intervalle temporel, le nombre d'intervalles temporels nécessaires correspondant à la quantité de données de synchronisation et de terminaux de réception ; et

ledit noeud de surveillance (3), lorsqu'il reçoit lesdits paquets, est conçu pour vérifier les contenus desdits paquets par référence à ladite table afin d'allouer certains des intervalles temporels non réservés auxdits noeuds d'interface et afin d'informer ladite interface des numéros des intervalles temporels réservés par les paquets.

16. Système de communication de données paquets selon la revendication 15, dans lequel :

lorsque lesdits noeuds d'interface (2) reçoivent les paquets en provenance dudit noeud de surveillance (3), ledit moyen de commande (39) est conçu pour stocker les numéros des intervalles temporels réservés au niveau de ladite table.

17. Système de communication de données paquets selon la revendication 16, dans lequel :

la communication entre lesdits noeuds d'interface (2, 2') et ledit noeud de surveillance (3) est réalisée afin d'utiliser le champ d'adresse et la zone d'information de paquet de chacun des intervalles temporels.

18. Système de communication de données paquets selon la revendication 16, dans lequel :

chaque dit en – tête d'image inclut la zone de commande utilisée pour une communication entre lesdits noeuds d'interface et ledit noeud de surveillance.

Fig. 1

EP 0 254 878 B1

Fig. 2

EP 0 254 878 B1

FRAME HEADER | PACKET | CHECK | FRAME

BIT INTERLEAVE

| PACKET HEADER | INFORMATION | SLOT1
| | | SLOT 2
| | | SLOT3
| | | SLOT4

SLOT1
SLOT2
SLOT3
SLOT4

| CTL | RA | SA | DM |

| AV | CM1 | CM2 | PS | ER | |

| FRAME SYNC PATTERN | FRAME COUNTER | COMMAND FIELD |

Fig. 3

Fig. 4

Fig. 5

Fig. 6

Fig. 7

Fig. 8

EP 0 254 878 B1

INTERFACE
NODE

TERMINAL

INTERFACE
NODE

SUPERVISORY
NODE

SEND REQUEST
(MODE, DESTINATION
AMOUNT OF DATA )

No ⟵ SYNC. COMU-
NICATION ?

Yes

SEIZURE OF EMPTY SLOT
OR UP-TO-DATE OF HEADER

SLOT RESERVATION REQUEST
(RESERVER, DESTINATION,
REQUIRED SLOT AMOUNT)

SEIZURE OF EMPTY SLOT
AND SENDING

PACKET SENDING

DESTINATION
RESERVED
?
No

PACKET
RECEPTION

EMPTY SLOTS
EXIST ?

Yes

NOTICE OF RESAVATION
NOT ALLOWABLE

SEIZURE OF EMPTY SLOT
OR UP-TO-DATE HEADER

SEND DATA
EXIST ?
Yes

NOTICE OF RESAVATION
NOT ALLOWABLE

Yes
RESAVATION
FLAG ON ?

NOTICE OF RESAVATION
COMPLETE

No

NOTICE OF RESAVATION COMPLETE

AVAILABLE FLAG
ON,

UP-TO-DATE OF TABLE

SEND REQUEST

Yes

BURST MODE ?

AVAILABLE FLAG
OFF, PACKET SEND

No

SLOT NUMBER
COINCEDENCE
?

No

Yes

RESAVATION FLAG
ON

AVAILABLE
SLOT ?

No

Yes

AVAILABLE FLAG
OFF

SEND PACKET

Fig. 9

Fig. 10 (A)

Fig. 10 (B)

Fig. 10 (C)

Fig. 10 (D)

Fig. 10 (E)

Fig. 10 (F)

SLOT |51

FRAME 1  FRAME 5  FRAME 4

POINTER

25  26  27  28

|52  ⑧

|53  ⑩

|54  ⑨

25'  26'  27'  28'  POINTER

⑤  ⑥  ⑦  ④

Fig. 10 (G)

SLOT |51

FRAME 2  FRAME 1  FRAME 5

POINTER

25  26  27  28

|52

|53  ⑩

|54

25'  26'  27'  28'  POINTER

⑨  ⑦  ⑧

Fig. 10 (H)

SLOT |51

FRAME 3  FRAME 2  FRAME 1

POINTER

25  26  27  28

|52

|53

|54

25'  26'  27'  28'  POINTER

⑩

Fig. 10 (I)

31

Fig. 11

Fig. 12

A; FRAME HEADER

B; PACKET HEADER

C; INFORMATION

D; OTHER FRAME

E; DUMMY